# EUROPÄISCHE PATENTANMELDUNG

(11) **EP 2 154 770 A1**
(43) Veröffentlichungstag der Anmeldung: **17.02.2010**
(21) Anmeldenummer: 08014289.6
(22) Anmeldetag: 11.08.2008
(51) Int. Cl.: H02K 9/19

(54) **Fräsmotoranordnung für einen Kalansanierungsroboter**

(71) Anmelder: JS Kanalrobotik GmbH, 76287 Rheinstetten (DE)
(72) Erfinder: Joachim, Thomas, 76287 Rheinstetten (DE); Sennert, Bernd, 71665 Vaihingen/Enz (DE)
(74) Vertreter: Lemcke, Brommer & Partner

(57) **Zusammenfassung**

Vorgeschlagen wird eine Fräsmotoranordnung (1) für einen Kanalsanierungsroboter oder dergleichen, die sich auszeichnet durch einen Fräsmotor (10), der als Elektromotor ausgebildet ist, und der in einem im Wesentlichen fluiddichten Gehäuse (11) angeordnet ist, wobei in dem Gehäuse (11) wenigstens ein erstes Fluidvolumen (17) definiert ist, welches zum Abführen der von dem Fräsmotor (10) abgegebenen Wärme vorgesehen ist.

## Beschreibung

Die Erfindung betrifft eine Fräsmotoranordnung nach dem Oberbegriff des Patentanspruchs 1 für einen Kanalsanierungsroboter oder dergleichen.

Weiterhin betrifft die Erfindung einen Kanalsanierungsroboter nach dem Oberbegriff des Patentanspruchs 15 zur Reinigung und Sanierung von Rohrleitungen und Kanälen, mit einer Fräseinheit, deren Fräswerkzeug von einer Fräsmotoranordnung mit einem Fräsmotor angetrieben ist.

Derartige Kanalsanierungsroboter mit entsprechenden Fräsmotoranordnungen sind bekannt. Sie werden in einen zu sanierenden Kanal oder eine zu sanierende Rohrleitung eingebracht und operieren dort im Wesentlichen autonom, indem sie mit ihrem Fräswerkzeug schadhafte Stellen des Kanals beziehungsweise der Rohrleitung für Ausbesserungsarbeiten vorbereiten.

In der Vergangenheit sind zu diesem Zweck ausschließlich Kanalsanierungsroboter eingesetzt worden, deren Fräsmotor als Hydraulikmotor oder pneumatischer Motor (Pneumatikmotor) ausgebildet ist, was jedoch aufgrund der relativ aufwändigen Versorgung eines derartigen Motors in der zu sanierenden Rohrleitung mit entsprechenden Nachteilen verbunden ist. So muss beispielsweise bei Verwendung eines Pneumatikmotors ein entsprechend großer, geeigneter Kompressor mitgeführt werden, während die Verwendung eines Hydraulikmotors das Nachführen sperriger Hochdruckleitungen erforderlich macht.

Der Erfindung liegt die Aufgabe zu Grunde, einen Kanalsanierungsroboter beziehungsweise eine Fräsmotoranordnung für einen solchen anzugeben, welche ohne sperrige Kompressoren beziehungsweise Druckluftversorgungsleitungen auskommt und somit flexibler einsetzbar und leichter handhabbar ist.

Die Aufgabe wird erfindungsgemäß gelöst mittels einer Fräsmotoranordnung mit den Merkmalen des Patentanspruchs 1 sowie mittels eines Kanalsanierungsroboters mit den Merkmalen des Patentanspruchs 15.

Vorteilhafte Weiterbildungen der Erfindung sind Gegenstand von Unteransprüchen, deren Wortlaut immer durch ausdrückliche Bezugnahme in die Beschreibung aufgenommen wird, um unnötige Textwiederholungen zu vermeiden.

Erfindungsgemäß ist eine Fräsmotoranordnung für einen Kanalsanierungsroboter oder dergleichen gekennzeichnet durch einen Fräsmotor, der als Elektromotor ausgebildet ist und der in einem im Wesentlichen fluiddichten Gehäuse angeordnet ist, wobei in dem Gehäuse wenigstens ein erstes Fluidvolumen definiert ist, welches zum Abführen der von dem Fräsmotor abgegebenen Wärme vorgesehen ist.

Ein erfindungsgemäßer Kanalsanierungsroboter zur Reinigung und Sanierung von Rohrleitungen und Kanälen, mit einer Fräseinheit, deren Fräswerkzeug von einer Fräsmotoranordnung mit einem Fräsmotor angetrieben ist, zeichnet sich dadurch aus, dass er eine erfindungsgemäße Fräsmotoranordnung aufweist.

Entgegen allgemein herrschender Vorurteile, wonach der Einsatz von Elektromotoren bei der Sanierung von Kanälen und Rohrleitungen einerseits aufgrund der regelmäßig feuchten Umgebungsbedingungen sowie andererseits aufgrund der angeblich problematischen Wärmeabfuhr nicht in Betracht zu ziehen war, schlägt die vorliegende Erfindung nunmehr erstmals vor, die Fräsmotoranordnung eines Kanalsanierungsroboters komplett elektrisch, das heißt ausschließlich mit Strom zu betreiben, um auf diese Weise die weiter oben beschriebenen Nachteile von Hydraulik- und Pneumatikmotoren zu vermeiden, so dass sich ein Kanalsanierungsroboter ergibt, der aufgrund vereinfachter Versorgung insgesamt leichter handhabbar und somit auch flexibler einsetzbar ist.

Die besondere Problematik steht vorliegend darin, dass der Fräsmotor innerhalb der zu sanierenden Rohrleitung auch unter Wasser arbeiten können muss. Somit ist zum Erreichen der notwendigen Wärmeabfuhr der Einsatz einer Luftkühlung, bei der zur Wärmeabfuhr Frischluft durch den Motor geblasen wird, nicht möglich, da der Motor ein wasserdichtes beziehungsweise allgemein fluiddichtes Gehäuse aufweisen muss.

Das zum Abführen der von dem Fräsmotor abgegebenen Wärme vorgesehene erste Fluidvolumen, welches den Fräsmotor im Zuge einer ersten Ausgestaltung der Erfindung direkt und im Wesentlichen vollständig umgeben kann, ist daher im Zuge einer speziellen Weiterbildung der Erfindung zumindest im Betrieb gegen die Umgebung hermetisch abgeschlossen. Es kann weiterhin mit einem ersten Fluid, insbesondere einem dünnflüssigen Öl gefüllt sein, welches die von dem Fräsmotor abgegebene Wärme aufnimmt.

Um die Wärmeabfuhr von der erfindungsgemäßen Fräsmotoranordnung weiter zu verbessern, sieht eine andere Weiterbildung der Erfindung vor, dass in dem Gehäuse noch ein zweites Fluidvolumen definiert ist, welches zum Abführen von Wärme des ersten Fluidvolumens beziehungsweise des dort enthaltenen ersten Fluids ausgebildet ist.

Vorteilhafter Weise sieht in diesem Zusammenhang eine andere Weiterbildung der erfindungsgemäßen Fräsmotoranordnung vor, dass das zweite Fluidvolumen das erste Fluidvolumen zumindest teilweise umgibt, um die vorstehend beschriebene Wärmeabfuhr zu optimieren.

Zu diesem Zwecke ist das zweite Fluidvolumen vorteilhafter Weise mit einem zweiten Fluid gefüllt, wobei es sich insbesondere um ein Kühlmittel, wie Wasser oder dergleichen, handeln kann.

Um die von dem zweiten Fluid aufgenommene Wärme optimal abführen zu können, sieht eine äußerst bevorzugte Weiterbildung der erfindungsgemäßen Fräsmotoranordnung vor, dass das zweite Fluidvolumen an einen extern bezüglich der Fräsmotoranordnung ausgebildeten Kühlkreislauf mit entsprechenden Leitungsmitteln sowie Pump- und Fördermitteln angeschlossen ist.

Insbesondere bei Ausbildung des vorstehend beschriebenen Kühlkreislaufs ergibt sich auf diese Weise, dass das zweite Fluidvolumen zur Wärmeabfuhr von dem zweiten Fluid durchströmt wird, was für eine optimale Motorkühlung sorgt.

Da die verwendeten Elektromotoren bezüglich Erschütterungen und/oder Schlägen relativ empfindlich sind, sieht eine andere bevorzugte Weiterbildung der erfindungsgemäßen Fräsmotoranordnung vor, dass zwischen dem Fräsmotor und einem an der Fräsmotoranordnung anzubringenden Fräswerkzeug wenigstens eine elastische Kupplung vorgesehen ist, welche die genannten Erschütterungen und/oder Schläge weitgehend abfängt.

Zum Zuführen der elektrischen Versorgung des Fräsmotors weist das Gehäuse bei einer anderen Weiterbildung der erfindungsgemäßen Fräsmotoranordnung wenigstens einen fluiddichten Anschluss zur Versorgung des Fräsmotors auf, welcher insbesondere in Form eines Anschlussteils mit Messing-Anschlussschraube ausgebildet sein kann.

Gegenüber dem restlichen Gehäuse ist der genannte Anschluss vorteilhafterweise elektrisch isoliert ausgebildet, insbesondere durch Vorsehen eines Isolierungsteils in Form einer das Anschlussteil umgebenden Kunststoffbuchse.

Die Wärmeabfuhr des Elektromotors an das erste Fluidvolumen beziehungsweise das erste Fluid lässt sich noch verbessern, wenn in Weiterbildung der erfindungsgemäßen Fräsmotoranordnung der Fräsmotor zusätzlich rippenartige Strukturen zur entsprechenden Wärmeabgabe aufweist.

Eine andere spezielle Weiterbildung der erfindungsgemäßen Fräsmotoranordnung sieht vor, dass der Fräsmotor als Drehstrommotor ausgebildet ist, insbesondere als bürstenloser 3-Phasen-Drehstrommotor.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: einen Längsschnitt durch eine erfindungsgemäße Fräsmotoranordnung für einen Kanalsanierungsroboter mit aufgesetzter Fräseinheit;
- Figur 2: eine erste Außenansicht der erfindungsgemäßen Fräsmotoranordnung gemäß Figur 1;
- Figur 3: eine zweite Außenansicht der erfindungsgemäßen Fräsmotoranordnung gemäß Figur 1; und
- Figur 4: eine Gesamtansicht der erfindungsgemäßen Fräsmotoranordnung mit angeschlossenem Kühlkreislauf.

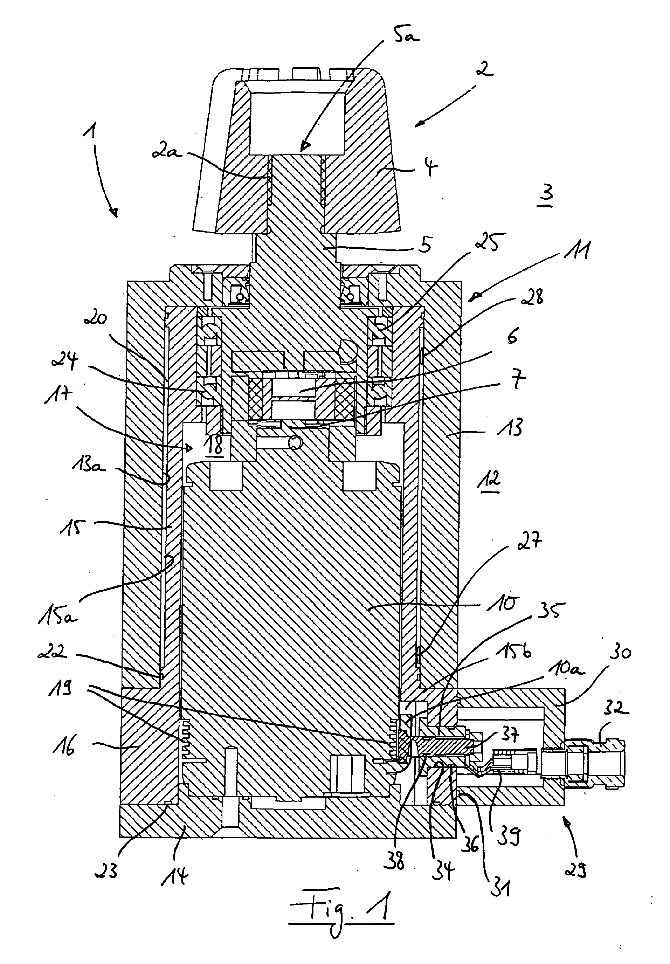

Figur 1 zeigt einen Längsschnitt durch eine erfindungsgemäße Fräsmotoranordnung 1 für einen Kanalsanierungsroboter mit aufgesetzter Fräseinheit 2. Fräsmotoranordnung 1 und Fräseinheit 2 sind Teil eines Kanalsanierungsroboters, welcher außer der Fräsmotoranordnung 1 und der Fräseinheit 2 noch weitere Einheiten und/oder Bestandteile umfassen kann, welche jedoch in Figur 1 nicht dargestellt sind. Der Kanalsanierungsroboter ist innerhalb einer Rohrleitung oder eines nicht weiter dargestellten Kanals 3 angeordnet, welche beziehungsweise welcher schadhaft sein kann und deshalb zu sanieren ist.

Die Fräseinheit 2 umfasst das eigentliche Fräswerkzeug 4, welches über eine Wellenanordnung (Frässpindel) 5 und eine elastische Kupplung 6 mit einer Abtriebswelle 7 der Fräsmotoranordnung 1 verbunden ist. Zum Bearbeiten schwer zugänglicher Bereiche, wie Kanalverzweigungen, kann die Fräseinheit 2 weiterhin einen beweglichen Fräsarm (nicht angezeigt) umfassen, an dessen Ende das Fräswerkzeug 4 angeordnet ist, um die Wände der Rohrleitung 3 erreichen und bearbeiten zu können, worauf jedoch vorliegend nicht weiter einzugehen ist. Gegebenenfalls ist in diesem Zusammenhang eine Mehrzahl von (elastischen) Kupplungen zwischen Fräswerkzeug 4 und Abtriebswelle 7 vorzusehen.

Die Abtriebswelle 7 der Fräsmotoranordnung 1 ist Teil des eigentlichen Fräsmotors 10, welcher als 3-Phasen-Drehstrommotor, das heißt als Elektromotor ausgebildet ist. Der Fräsmotor 10 ist innerhalb eines mehrteiligen Gehäuses 11 angeordnet und durch dieses gegenüber einem in der Rohrleitung 3 enthaltenen Fluid 12, beispielsweise Wasser, geschützt. Das Gehäuse 11 weist einen beliebigen, vorzugsweise rechteckigen (quadratischen) oder (kreis-)runden Querschnitt auf und setzt sich zusammen aus einem topfförmigen ersten Gehäuseteil 13 aus einem metallischen Werkstoff, durch dessen Boden die Frässpindel 5 fluiddicht nach außen geführt ist. An seinem der Abtriebswelle 7 bzw. der Frässpindel 5 gegenüberliegenden Ende weist das Gehäuse 11 ein deckelartiges zweites Gehäuseteil 14 aus einem metallischen Werkstoff auf, wobei zwischen dem ersten Gehäuseteil 13 und dem zweiten Gehäuseteil 14 ein drittes, hülsenförmiges Gehäuseteil 15 aus einem metallischen Werkstoff angeordnet ist, welches an seinem dem Deckel 14 zugewandten Ende einen umlaufenden Vorsprung 16 aufweist, über welchen es einerseits mit dem Deckel 14 und andererseits mit dem ersten Gehäuseteil 13 in Anlage tritt, um so das Gehäuse 11 zu bilden.

Innerhalb des aus dem Gehäuseteilen 13 bis 15 gebildeten Gehäuses 11 ist ein erstes Fluidvolumen 17 gebildet, in welchem der Fräsmotor 10 angeordnet ist. Das erste Fluidvolumen 17 ist mit einem ersten Fluid in Form von dünnflüssigem Öl 18 gefüllt, welches den Fräsmotor 10 somit im Wesentlichen vollständig umgibt, um die von diesem im Betrieb erzeugte Wärme abzuführen. Für einen besseren Wärmeübergang weist der Fräsmotor 10 Rippenstrukturen 19 auf, welche die Kontaktfläche mit dem Öl 18 vergrößern. Darüber hinaus ist zwischen einer Außenumfangsfläche 15a, des dritten Gehäuseteils 15 und einer Innenumfangsfläche 13a des ersten Gehäuseteils 13 ein zweites Fluidvolumen 20 definiert, welches das erste Fluidvolumen 17 nach Art eines Zylindermantels zumindest teilweise umgibt und mit einem flüssigen Kühlmittel, insbesondere Wasser gefüllt ist. Das erste Gehäuseteil 13 und das dritte Gehäuseteil 15 sind bei Bezugszeichen 21 und 22 mittels O-Ring-Dichtungen gegeneinander abgedichtet. Das zweite Gehäuseteil 14 und das dritte Gehäuseteil 15 sind bei Bezugszeichen 23 ebenfalls über eine O-Ring-Dichtung gegeneinander abgedichtet.

Die Lagerung der Frässpindel 5 erfolgt über entsprechende Lager 24, 25. Bei der bereits erwähnten Kupplung 6 zwischen der Frässpindel 5 und der Abtriebswelle 7 des Fräsmotors 10 handelt es sich um eine elastische Kupplung, damit an dem Fräswerkzeug 4 auftretende Erschütterungen und Schläge sich nicht über die Wellen 5, 7 auf den diesbezüglich relativ empfindlichen Elektromotor 10 übertragen. Die Frässpindel 5 kann an ihrem distalen Ende 5a eine Gewindestruktur aufweisen, um sie an ein entsprechend komplementäres Gegenstück 2a der Fräseinheit 2 ankoppeln zu können, beispielsweise das Fräswerkzeug 4 oder eine (bewegliche) Spindelverlängerung. Auch dort gegebenenfalls vorhandene weitere Kupplungen sind vorzugsweise elastische Kupplungen, damit sich Schläge möglichst nicht auf die Fräsmotoranordnung 1 beziehungsweise den Fräsmotor 10 übertragen.

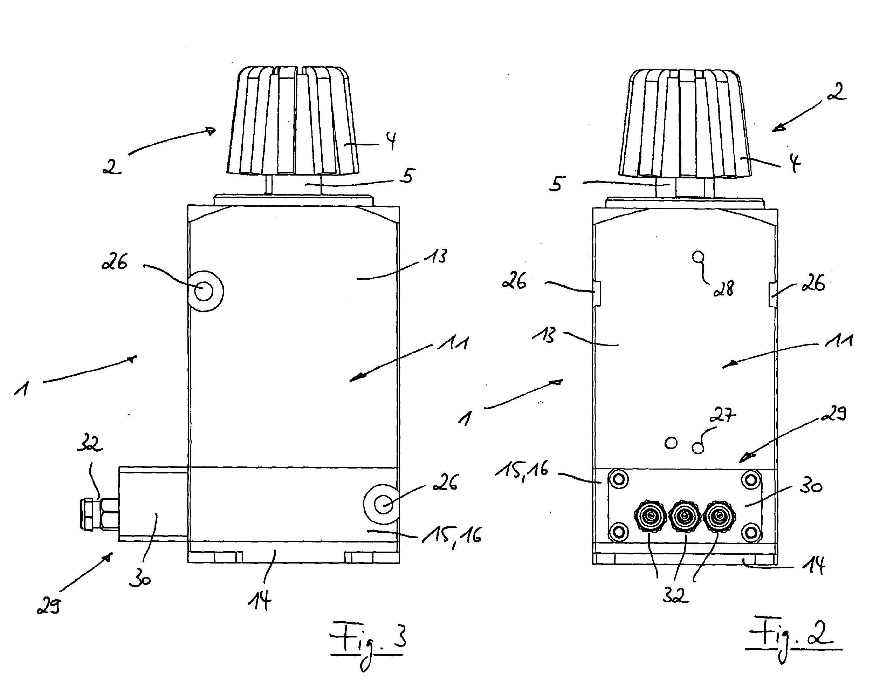

Die Vertiefungen der Fräsmotoranordnung 1 bzw. deren Gehäuses 11 bei den Bezugszeichen 26 (vgl. Figuren 2 und 3) dienen zum Befestigen derselben innerhalb eines Kanalsanierungsroboters.

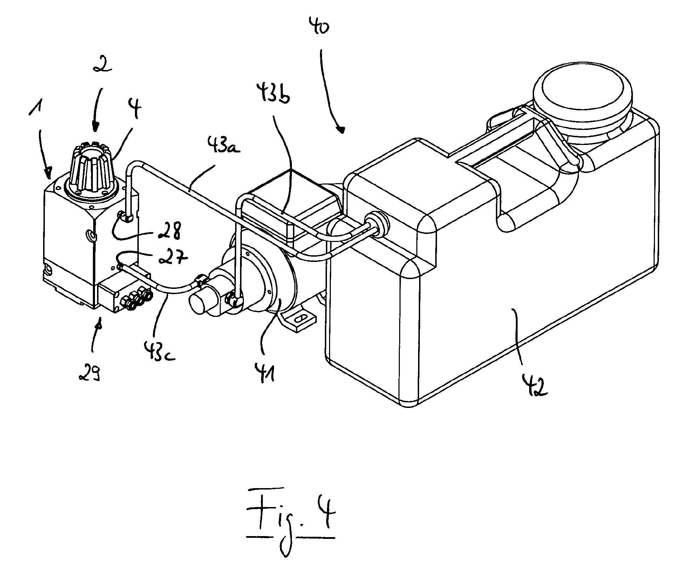

Bei Bezugnahme auf die Figur 2 ist weiterhin erkennbar, dass das Gehäuse 11 im Bereich des ersten Gehäuseteils 13 Öffnungen zum Einströmen 27 und zum Ausströmen 28 eines zweiten Fluids (des Kühlwassers) in das zweite Fluidvolumen 20 hinein beziehungsweise aus diesem hinaus aufweist, die zur Kanalumgebung hin öffnen. Die Ausströmöffnungen 28 sind auch im rechten Bereich der Figur 1 erkennbar. Die Öffnungen 27, 28 sind über dort nicht gezeigte Leitungsmittel mit einem ebenfalls dort nicht gezeigten Pumpmittel zu einem Kühlkreislauf für das bereits erwähnte Kühlmittel (Kühlwasser) verbunden (vgl. Figur 4).

Das den Motor 10 umgebende Innengehäuse aus Gehäuseteil 14 und Gehäuseteil 15, das heißt das erste Fluidvolumen 17 ist somit komplett mit dünnflüssigem Öl gefüllt, um die Wärme aus den Motorspulen (nicht gezeigt) des Elektromotors 10 abzuführen und gleichmäßig an das Gehäuse 11, insbesondere das dritte Gehäuseteil 15 weiterzuleiten. Anschließend nimmt der Kühlmittelmantel im Bereich des zweiten Fluidvolumens 20 diese Wärme von dem dritten Gehäuseteil 15 auf, und der vorstehend beschriebene Kühlkreislauf sorgt durch Austausch des Kühlmittels über die Öffnungen 27 und 28 dafür, dass die Betriebstemperatur des Motors 10 in einem konstanten Bereich von maximal 60°C bleibt.

Für den Einsatz in einem Kanal oder einer Rohrleitung 3 muss der Elektromotor 10 insgesamt ein fluiddichtes, insbesondere wasserdichtes Gehäuse aufweisen. Zu diesem Zweck weist das Gehäuse 11 im Bereich des Vorsprungs 16 des dritten Gehäuseteils 15 eine fluiddichten Durchführung 29 für die elektrischen Versorgungsleitungen des Elektromotors 10 auf. Die Durchführung 29, welche insbesondere in der Figur 1 und in der Figur 2 gut zu erkennen ist, ist gebildet aus einem im Wesentlichen quaderförmigen, einseitig offenen Kasten 30, welcher mit seiner geöffneten Seite fluiddicht (O-Ring 31) an die Außenseite des dritten Gehäuseteils 15 im Bereich des Vorsprungs 16 angeschraubt ist (vgl. Figur 2). An seiner dem Gehäuse 11 abgewandten Seite weist der Kasten 30 eine Anzahl von wasserdichten Kabelverschraubungen 32 auf, über welche elektrische Versorgungsleitungen von außen in den Kasten 30 und von dort weiter zum Motor 10 geführt werden können, worauf weiter unten noch genauer eingegangen wird. Wie insbesondere die Figur 2 zeigt, sind an dem Kasten 30 zur Versorgung eines Drehstrommotors speziell drei der genannten Kabelverschraubungen 32 nebeneinander angeordnet.

Anhand von Figur 1 wird nun die Durchführung der elektrischen Verbindungen aus dem Innenraum des Kastens 30 bis zum Motor 10 beschrieben. Das dritte Gehäuseteil 15 weist dazu im Bereich des Vorsprungs 16 korrespondierend mit der Anordnung des Kastens 30 eine den Kabelverschraubungen 32 entsprechende Anzahl von Durchbrüchen 34 auf, in welche elektrische isolierende Kunststoffbuchsen 35 fluiddicht (O-Ring 36) eingesetzt sind. In die Kunststoffbuchsen 35 sind jeweils Schraubeinsätze 37 aus Messing eingesetzt und gegenüber den Kunststoffbuchsen 35 mittels jeweils eines weiteren O-Rings 38 abgedichtet. Über die Schraubeinsätze 37 erfolgt dann von außen, das heißt über die Durchführung 29 die Kontaktierung entsprechender elektrischer Kontakte 10a des Motors 10. Zwecks Anordnung der genannten elektrischen Kontakte 10a des Motors 10, der Kunststoffbuchsen 35 sowie der Schraubeinsätze 37 weist das dritte Gehäuseteil 15 der Fräsmotoranordnung 1 in diesem Bereich einen inneren Rücksprung 15b auf, welcher ausreichend Freiraum zu Anordnung der vorstehend genannten Bestandteile der Fräsmotoranordnung 1 bietet.

In elektrischer Wirkverbindung mit den jeweiligen Schraubeinsätze 37 sind im dem Kasten 30 Kabelschuhe 39 vorgesehen, welche neben der elektrischen Kontaktierung zum mechanischen Halten (Zugentlastung) der durch die Kabelverschraubungen 32 eingeführten elektrischen Versorgungsleitungen dienen. Die galvanische Verbindung zwischen den Schraubeinsätzen 37 und den Kabelschuhen 39 kann - wie gezeigt - gekrümmt, abgewinkelt oder in vergleichbarer Weise ausgeführt sein, um einen für den Kasten 30 benötigten Bauraum möglichst zu minimieren.

Alternativ zu der in Figur 1 gezeigten Ausgestaltung können die Kabelverschraubungen auch auf einer anderen Seite des Kastens 30, beispielsweise nach unten in Figur 1, aus diesem herausgeführt sein, um einen seitlichen Platzbedarf der gezeigten Fräsmotoranordnung zu reduzieren. Die vorstehend beschriebene Herausführung der Kabelverschraubungen kann auch zusätzlich zu der in Figur 1 gezeigten vorgesehen sein, um selektiv verschiedene Anschlussmöglichkeiten bereit zu stellen.

Abschließend zeigt Figur 4 eine perspektivische Gesamtansicht der erfindungsgemäßen Fräsmotoranordnung 1 mit angeschlossenem Kühlkreislauf 40. Letzterer umfasst Fördermittel in Form einer Kühlmittelpumpe 41 sowie einen Kühlmittelbehälter 42, der mit einem geeigneten Kühlmittel, insbesondere Kühlwasser gegebenenfalls mit entsprechenden Zusätzen, gefüllt ist. Zwischen dem Kühlmittelbehälter 42, der Pumpe 41 und der Fräsmotoranordnung 1 sind jeweils Kühlmittelleitungen 43a-c vorgesehen. Speziell verbindet die Kühlmittelleitung 43a die Ausströmöffnung 28 mit dem Kühlmittelbehälter 42, während die Kühlmittelleitung 43c die Kühlmittelpumpe 41 mit der Einströmöffnung 27 verbindet. Über die weitere Kühlmittelleitung 43b, welche den Kühlmittelbehälter 42 mit der Pumpe 41 verbindet, ergibt sich so ein geschlossener Kühlmittelkreislauf, wie weiter oben unter Bezugnahme auf die Figuren 1 und 2 bereits beschrieben.

Die Verbindungslänge von der Pumpe 41 zur Fräsmotoranordnung 1 bzw. von der Fräsmotoranordnung 1 zurück zum Kühlmittelbehälter 42 kann größenordnungsmäßig im Bereich von 100 Meter liegen. Eine solche Länge reicht als Wärmetauscher für das Kühlmittel aus, so dass vorliegend keine weiteren Kühleinrichtungen benötigt werden.

Wie sich aus dem Vorstehenden ergibt, sind die Kühlmittelleitungen 43a-c vorzugsweise als zumindest teilweise flexible Schlauchelemente ausgebildet, so dass die Pumpe 41 und der Behälter 42 beim Einsatz der Fräsmotoranordnung 1 außerhalb des zu sanierenden Rohres oder Kanals verbleiben können.

Im Vergleich zu vorbekannten Fräsmotoranordnungen sind die Kühlmittelleitungen gemäß Figur 4 deutlich weniger sperrig und somit einfacher zu handhaben als beispielsweise die Hochdruckleitungen bei Verwendung von Hydraulikmotoren.

## Patentansprüche

1. Fräsmotoranordnung (1) für einen Kanalsanierungsroboter oder dergleichen, **gekennzeichnet durch** einen Fräsmotor (10), der als Elektromotor ausgebildet ist und der in einem im Wesentlichen fluiddichten Gehäuse (11) angeordnet ist, wobei in dem Gehäuse (11) wenigstens ein erstes Fluidvolumen (17) definiert ist, welches zum Abführen der von dem Fräsmotor (10) abgegebenen Wärme vorgesehen ist.

2. Fräsmotoranordnung (1) nach Anspruch 1, **dadurch gekennzeichnet, dass** das erste Fluidvolumen (17) den Fräsmotor (10) direkt und im Wesentlichen vollständig umgibt.

3. Fräsmotoranordnung (1) nach Anspruch 1 oder 2, **dadurch gekennzeichnet, dass** das erste Fluidvolumen (17) mit einem ersten Fluid (18), insbesondere einem dünnflüssigen Öl gefüllt ist.

4. Fräsmotoranordnung (1) nach mindestens einem der Ansprüche 1 bis 3, **dadurch gekennzeichnet, dass** das erste Fluidvolumen (17) zumindest im Betrieb gegen die Umgebung (12) hermetisch abgeschlossen ist.

5. Fräsmotoranordnung (1) nach mindestens einem der Ansprüche 1 bis 4, **dadurch gekennzeichnet, dass** in dem Gehäuse (11) wenigstens ein zweites Fluidvolumen (20) definiert ist, welches zum Abführen von Wärme aus dem ersten Fluidvolumen (17) ausgebildet ist.

6. Fräsmotoranordnung (1) nach Anspruch 5, **dadurch gekennzeichnet, dass** das zweite Fluidvolumen (20) das erste Fluidvolumen (17) zumindest teilweise umgibt.

7. Fräsmotoranordnung (1) nach Anspruch 5 oder 6, **dadurch gekennzeichnet, dass** das zweite Fluidvolumen (20) mit einem zweiten Fluid, insbesondere mit einem Kühlmittel, wie Wasser oder dergleichen, gefüllt ist.

8. Fräsmotoranordnung (1) nach mindestens einem der Ansprüche 5 des 7, **dadurch gekennzeichnet, dass** das zweite Fluidvolumen (20) an einen extern der Fräsmotoranordnung (1) ausgebildeten Kühlkreislauf angeschlossen ist.

9. Fräsmotoranordnung (1) nach Anspruch 7 und Anspruch 8, **dadurch gekennzeichnet, dass** das zweite Fluidvolumen (20) zur Wärmeabfuhr von dem zweiten Fluid durchströmt ist.

10. Fräsmotoranordnung (1) nach mindestens einem der Ansprüche 1 bis 9, **dadurch gekennzeichnet**, das zwischen dem Fräsmotor (10) und einem an der Fräsmotoranordnung (1) anzubringenden Fräswerkzeug (4) wenigstens eine elastische Kupplung (6, 9) vorgesehen ist.

11. Fräsmotoranordnung (1) nach mindestens einem der Ansprüche 1 bis 10, **dadurch gekennzeichnet, dass** das Gehäuse (11) wenigstens einen fluiddichten Anschluss (29) für die elektrische Versorgung des Fräsmotors (10) aufweist, insbesondere umfassend ein Anschlussteil (37) mit Messing-Anschlussschraube.

12. Fräsmotoranordnung (1) nach Anspruch 11, **dadurch gekennzeichnet, dass** der Anschluss (37) gegenüber dem restlichen Gehäuse (11) durch ein Isolierungsteil (35), insbesondere in Form einer das Anschlussteil (37) umgebenden Kunststoffbuchse, elektrisch isoliert ist.

13. Fräsmotoranordnung (1) nach mindestens einem der Ansprüche 1 bis 12, **dadurch gekennzeichnet, dass** der Fräsmotor (1) rippenartige Strukturen (19) zur Wärmeabgabe an das erste Fluidvolumen (17) beziehungsweise an das erste Fluid (18) aufweist.

14. Fräsmotoranordnung (1) nach mindestens einem der Ansprüche 1 bis 13, **dadurch gekennzeichnet, dass** der Fräsmotor (10) als insbesondere bürstenloser 3-Phasen-Drehstrommotor ausgebildet ist.

15. Kanalsanierungsroboter zur Reinigung und Sanierung von Rohrleitungen und Kanälen (3), mit einer Fräseinheit (2), deren Fräswerkzeug (4) von einer Fräsmotoranordnung (1) mit einem Fräsmotor (10) angetrieben ist, **dadurch gekennzeichnet, dass** die Fräsmotoranordnung (1) gemäß mindestens einem der vorhergehenden Ansprüche ausgebildet ist.
